(19) Europäisches Patentamt
European Patent Office
Office européen des brevets

(11) **EP 1 851 453 B1**

(12) **FASCICULE DE BREVET EUROPEEN**

(45) Date de publication et mention de la délivrance du brevet:
**02.11.2011 Bulletin 2011/44**

(21) Numéro de dépôt: **06709525.7**

(22) Date de dépôt: **20.02.2006**

(51) Int Cl.:
**F16C 33/10** (2006.01)    **F16C 11/06** (2006.01)

(86) Numéro de dépôt international:
**PCT/FR2006/050146**

(87) Numéro de publication internationale:
**WO 2006/087498 (24.08.2006 Gazette 2006/34)**

(54) **ORGANE DE GUIDAGE AUTOLUBRIFIANT**

SELBSTSCHMIERENDES FÜHRUNGSELEMENT

SELF-LUBRICATING GUIDING ELEMENT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.02.2005 FR 0550474**

(43) Date de publication de la demande:
**07.11.2007 Bulletin 2007/45**

(73) Titulaire: **H.E.F.**
**42160 Andrézieux-Bouthéon (FR)**

(72) Inventeurs:
• **BARLERIN, Jean-claude**
**F-42170 Saint-Just-Saint-Rambert (FR)**

• **CHADUIRON, Eric**
**F-42140 Viricelles (FR)**

(74) Mandataire: **Thivillier, Patrick et al**
**Cabinet Laurent & Charras**
**3 Place de l'Hôtel de Ville**
**B.P. 203**
**42005 Saint-Etienne Cedex 1 (FR)**

(56) Documents cités:
**FR-A- 1 019 801      FR-A- 2 523 010**
**FR-A- 2 693 520      US-A- 4 576 488**
**US-A- 4 678 348      US-A1- 2003 190 101**

**EP 1 851 453 B1**

**Description**

L'invention concerne un organe de guidage autolubrifiant pour articulations ou paliers.

Plus particulièrement, l'invention trouve une application avantageuse dans le cas d'articulations ou de paliers travaillant dans des conditions et environnements difficiles, en étant fortement chargés et en travaillant en ambiance abrasive, et éventuellement corrosive.

Ces types d'articulations et de paliers peuvent se trouver dans de nombreux domaines techniques parmi lesquels on peut citer, à titre indicatif, les travaux publics, la sidérurgie, les machines agricoles, les véhicules de transport, ... Plus généralement, les articulations concernées par l'invention fonctionnent uniquement sous fortes charges avec des mouvements oscillants de faible vitesse et sont préalablement graissées. Ces conditions de fonctionnement ne peuvent en aucun cas créer un régime hydrodynamique, comme c'est le cas de l'enseignement des brevets US 4678348 et US 4576488. L'invention s'applique donc à des articulations fonctionnant en régime de lubrification de type onctueux,.

Compte tenu du domaine d'application, ces articulations ou paliers doivent notamment avoir des caractéristiques de frottement et de tenue à l'usure, excellentes, en ayant subi un graissage uniquement au montage et/ou avec des espacements de lubrification très importants.

Différentes solutions techniques ont été proposées pour constituer des réserves de graisse sur la surface frottante.

Par exemple, le brevet FR 2.523.010 divulgue une bague d'articulation dont l'alésage est moleté, pour faire office de réserve à un lubrifiant, notamment de la graisse.

Dans le brevet FR 2.693.520, l'alésage de la bague ou organe de guidage, est équipé d'une garniture où pivote un axe en contact avec une face de portée de la garniture. Cette garniture peut être constituée d'un feuillard roulé perpendiculairement à sa longueur et fretté dans l'alésage de la bague.

Ces dispositions permettent notamment d'augmenter la résistance à l'usure abrasive et au grippage qui est souvent élevée compte tenu des applications envisagées. Le graissage s'effectue au montage ou de façon périodique mais avec espacement important.

Avec ce type de bague, quelle que soit sa forme de réalisation, notamment au niveau de son alésage qui constitue la surface de frottement, avec ou non des agencements aptes à faire office de réserve de graisse, des problèmes importants doivent être résolus pour pouvoir assurer une lubrification permanente ou quasi permanente, en évitant, par conséquent, à la graisse ou autre lubrifiant de s'échapper.

A partir de cet état de la technique, le problème que se propose de résoudre l'invention est de constituer une réserve de graisse au niveau de la zone de frottement, en évitant, non seulement à la graisse ou autre lubrifiant de s'échapper mais, tout au contraire, en permettant de réapprovisionner en lubrifiant cette zone de frottement.

Pour résoudre un tel problème, il a été conçu et mis au point un organe de guidage selon la revendication 1.

Il en résulte, d'une manière avantageuse, la possibilité de diminuer les fréquences de graissage, étant donné que le lubrifiant reste au niveau de la zone de frottement, en n'ayant pas tendance à s'échapper compte tenu notamment de la communication des rainures avec les gorges.

Pour résoudre le problème posé de constituer une réserve de lubrifiant en communication avec les gorges de retenue, les rainures peuvent présenter différentes formes de réalisation.

Avantageusement, les rainures sont orientées de manière à former un quadrillage.

Compte tenu du problème à résoudre, la profondeur des gorges est d'environ 1 à 10 fois supérieure à la profondeur des rainures.

Par ailleurs, il est apparu avantageux que la profondeur des gorges soit au plus égale à sensiblement le tiers de l'épaisseur du corps.

Avantageusement, les rainures délimitent une zone représentant environ de 30 à 70 % de la zone de frottement.

Il est également apparu avantageux que les gorges soient positionnées entre 1 et 6 mm environ de chacune des extrémités de l'alésage. La largeur des gorges est comprise entre 0,5 et 5 mm environ.

L'invention est exposée ci-après plus en détail à l'aide des figures des dessins annexés dans lesquels :

- la figure 1 est une vue en perspective avec coupe partielle d'une forme de réalisation d'une bague pour articulations ou paliers selon l'invention ;
- la figure 2 est une vue en coupe longitudinale d'une bague, selon une forme de réalisation préférée.
- la figure 3 est une vue correspondant à la figure 2 après montage d'un axe ;
- les figures 4, 5, 6 et 7 sont des vues partielles en coupe montrant, à titre d'exemples, différents profils en fond de gorge ;
- la figure 8 est une vue en perspective d'une bague selon l'invention pour une articulation du type rotule ;
- la figure 9 est une vue en coupe longitudinale correspondant à la figure 8 ;
- La figure 10 est une vue en coupe longitudinale d'une bague selon une autre forme de réalisation au niveau des rainures

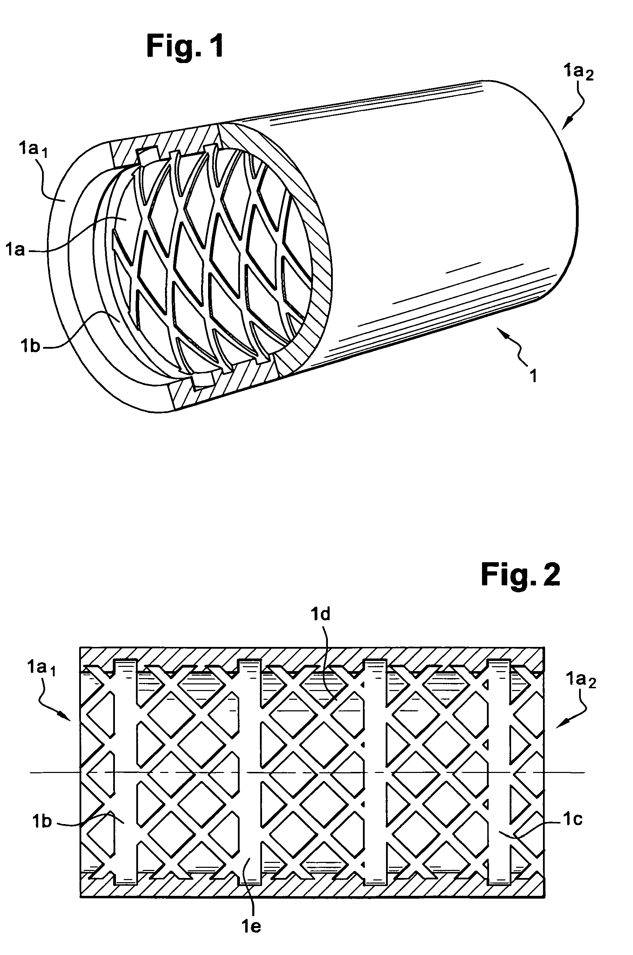

On a illustré, figure 1, un exemple de réalisation d'un organe de guidage sous forme d'un corps cylindrique (1) présentant un alésage coaxial (1a) pour le montage avec frottement d'un axe (2) en combinaison avec de la graisse ou autre lubrifiant. Généralement, le corps cylindrique (1) est réalisé à partir de tout type de matériau présentant une haute résistante à l'usure et/ou au grippage et à la corrosion, dans des conditions de fonctionnement extrêmes, notamment en cas de pression élevée, de corrosion et d'abrasion. Le corps cylindrique (1), notamment son alésage (la), peut être soumis à tout type de traitement de surface.

Comme il ressort de la suite de la description, par organe de guidage on se réfère, par exemple, à des paliers, des glissières, des rotules...

Selon l'invention, chacune des extrémités (1a1) et (1a2) de l'alésage (1a), présente au moins une gorge (1b) et (1c) apte(s) à éviter à la graisse ou autre lubrifiant de sortir de la surface de frottement. A titre indicatif nullement limitatif, la profondeur des gorges (1b) et (1c) peut être comprise entre 0, 3 et 3 mm environ. Plus généralement, la profondeur des gorges (1b) et (1c) est, au plus, égale à sensiblement le tiers de l'épaisseur du corps (1).

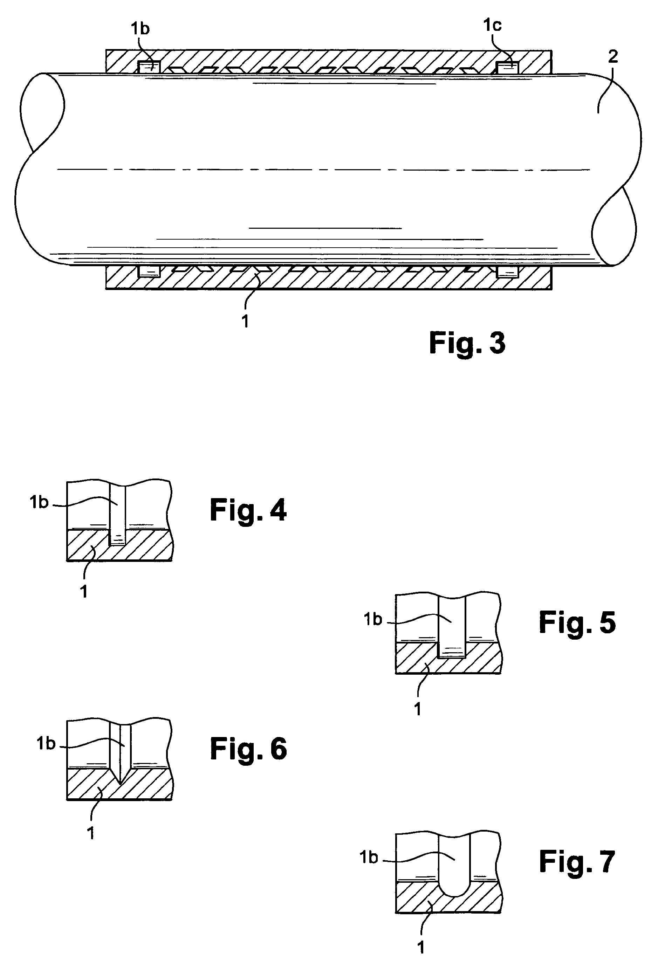

Le profil des gorges peut présenter différentes formes, notamment et de manière non limitative carrée (figure 4), rectangulaire (figure 5), triangulaire (figure 6), ronde (figure 7), en étant chanfreinée ou non.

Compte tenu du problème posé à résoudre d'éviter à la graisse de sortir de la surface de frottement, les gorges (1b) et (1c) sont positionnées à une distance (x) de chacune des extrémités (1a1) et (1a2) de l'alésage. Cette distance est comprise entre 1 et 6 mm environ. De même, la largeur des gorges (1b) et (1c) est comprise entre 0,5 et 5 mm environ.

Selon une caractéristique importante de l'invention, l'alésage (1a) présente, au moins entre les gorges (1b) et (1c), des rainures (1d) convenablement orientées et débouchant dans l'une au moins desdites gorges (1b) et (1c), lesdites rainures faisant office de réserve de lubrifiant.

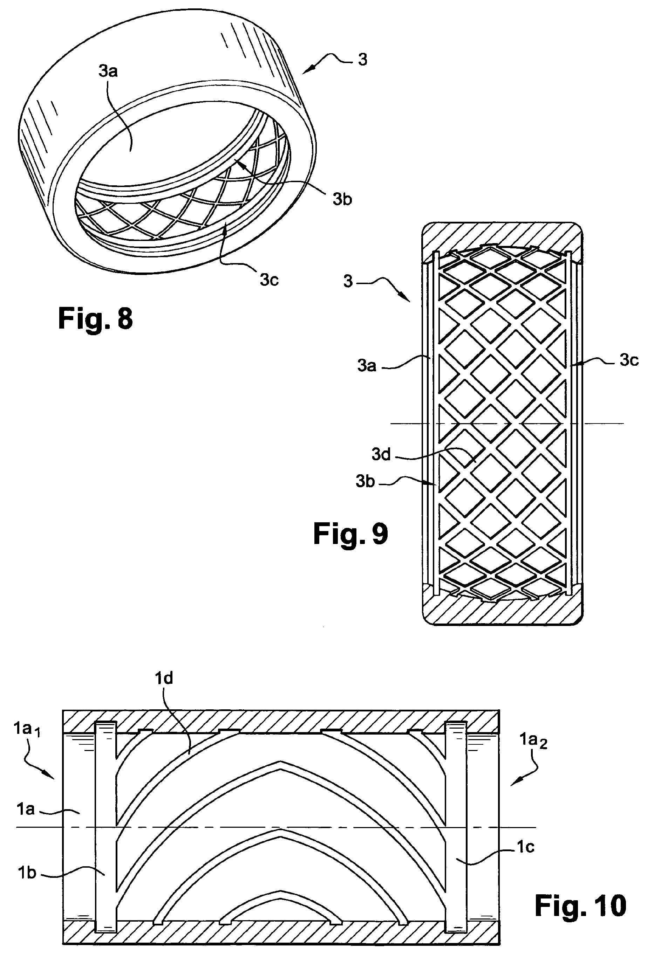

Par exemple, comme le montre la figure 10, ces rainures (1d) peuvent être orientées de manière à former des chevrons. Ces chevrons peuvent être réunis à leur sommet, comme c'est le cas dans l'exemple illustré. Sans pour cela sortir du cadre de l'invention, il n'est pas nécessaire que les chevrons soient réunis à leur sommet.

Dans la forme de réalisation illustrée figure 2, qui est considérée comme particulièrement avantageuse, les rainures (1d) sont orientées de manière à former un quadrillage.

Compte tenu de la combinaison des gorges (1b) et (1c) et des rainures (1d), il en résulte que lesdites gorges en communication avec lesdites rainures permettent d'éviter l'évacuation du lubrifiant contenu au niveau de la zone délimitée par lesdites rainures (1d).

Avantageusement, l'alésage (1a) du corps (1) présente des gorges (1e) réparties sur la totalité de sa longueur afin de faciliter le réapprovisionnement des rainures (1d) en graisse ou autre lubrifiant. C'est ainsi que les gorges (1b), (1c), (1e) sont réparties sur la totalité de la longueur du corps avec un espace (e) selon lequel:

$$p \leq e \leq 6p$$

Formule dans laquelle :

p = pas entre les rainures ;
e = espacement entre les gorges ;

De même, le nombre de gorges (1b), (1c), (1e) est réparti sur la totalité de la longueur du corps et correspond à la formule :

$$\frac{0,1\,L}{1} \leq n \leq \frac{0,25\,L}{1}$$

formule dans laquelle :

n = nombre de gorges ;
L = longueur du corps ;
1 : largeur des gorges ;

La profondeur des gorges (1b) et (1c) est d'environ 1 à 10 fois supérieure à la profondeur des rainures (1d). Les rainures (1d) délimitent une zone (chevrons ou quadrillage, par exemple) représentant environ 30 à 70 % de la zone de frottement.

A titre d'exemple indicatif, une bague peut présenter les caractéristiques suivantes au niveau des gorges et des rainures sous forme de quadrillage :

**Gorges** :

■ Profondeur : 1,5 mm environ ;
■ Largeur : 2 mm environ ;
■ Distance du bord : 1,5 mm à 2 mm ;

■ Nombre : $\dfrac{0,1L}{1} \le n \le \dfrac{0,25L}{1}$ ;

■ Espacement : 8 à 12 mm ;

**Rainures (quadrillage)**

Pas : 4 à 6 mm ;
Profondeur : 0,3 mm ;
Angle : 30° à 35;

Ce type de bague trouve de nombreuses applications parmi lesquelles on peut citer, à titre indicatif nullement limitatif :

- les matériels de travaux publics (pelleteuse hydraulique, chargeurs, broyeurs, ...) ;
- les équipements agricoles (essieux avant de tracteurs, charrues, chargeurs télescopiques, débroussailleuses, ... ;
- la sidérurgie (galets de convoyeurs, roulements, ...) ;
- les chargeurs de manutention, .... ;

L'invention s'applique aussi aux glissières et rotules et plus généralement à tout type d'articulation. Les figures 8 et 9 montent un exemple de réalisation d'une bague (3) pour une articulation du type à rotule. La cage (3a) de la bague destinée à recevoir la tête de la rotule (non représentée) présente, à chacune de ses extrémités, une gorge (3b) et (3c) pour canaliser et retenir la graisse, comme indiqué précédemment.

Entre les gorges (3b) et (3c) sont formées des rainures (3d), sous forme de quadrillage ou de chevrons par exemple, en communication avec lesdites gorges.

On rapporte ci-après des résultats d'essais effectués dans le cas d'une application à un palier lisse sans réserve de graisse et à un palier avec réserve de graisse, d'une part selon l'état antérieur de la technique et, d'autre part, selon l'invention.

EXEMPLE 1 : Organe de guidage autolubrifiant selon l'état antérieur de la technique, c'est-à-dire sans gorges circulaires, mais avec seulement des rainures, sous forme d'un quadrillage, réparties sur la surface du palier pour faire office de réserve de graisse.

| | |
|---|---|
| Nature de l'arbre : | acier 16NiCr6 cémenté trempé |
| Nature du palier : | palier quadrillé (avec réserve de graisse avec traitement de surface anti-usure et anti-grippage) |
| Diamètre de l'arbre : | 30 mm |
| Largeur de l' organe de guidage : | 1= 20 mm |
| Mouvement : | rotation alternée sur 90° à la fréquence de 1 Hz |
| Pression calculée en surface projetée : | 50 Mpa |
| Vitesse de glissement : | 8 mm/s |
| Graisse extrême pression : | au savon au lithium, type SNR-LUB EP, grade NLGI 2 |

Graissage au montage, puis fonctionnement sans apport supplémentaire de graisse.

*Résultats des essais :* Nombre d'oscillations avant augmentation rapide du coefficient de frottement : 138 000

EXEMPLE 2 : Organe de guidage autolubrifiant selon l'invention.

On reproduit l'exemple 1, sauf que l'organe de guidage possède deux gorges circulaires de largeur 2 mm et de profondeur 2 mm situées à une distance d'1 mm des extrémités du palier, entre les gorges étant formées des rainures formant quadrillage, en communication avec lesdites gorges.
*Résultats des essais :* Nombre d'oscillations avant augmentation rapide du coefficient de frottement > 500 000 (essai arrêté avant son terme).
Les avantages ressortent bien de la description, en particulier on souligne et on rappelle que les gorges évitent le rejet de la graisse, tandis que les rainures permettent de répartir ladite graisse dans la zone de frottement.

**Revendications**

1. Organe de guidage **graissé fonctionnant en régime onctueux** sous forme d'un corps (1) présentant un alésage (1a) pour le montage avec frottement et capacité d'articulation et/ou de coulissement d'un élément (2), **caractérisé en ce que** le corps (1) est réalisé à partir d'un matériau présentant une haute résistance à l'usure et/ou au grippage et à la corrosion, chacune des extrémités de l'alésage (1a) présente au moins une gorge (1b) et (1c) apte à éviter à **la graisse** de sortir de la zone de frottement, ledit alésage (1a) présentant, au moins entre lesdites gorges (1b) et (1c), des rainures orientées (1d) débouchant dans l'une des gorges au moins et aptes à faire office de réserve de **graisse**.

2. Organe de guidage selon la revendication 1, **caractérisé en ce que** l'alésage du corps (1) présente des gorges (1e) réparties sur la totalité de sa longueur pour alimenter en **graisse** l'ensemble des rainures.

3. Organe de guidage selon la revendication 1, **caractérisé en ce que** les rainures (1d) sont orientées de manière à former un quadrillage.

4. Organe de guidage selon la revendication 1, **caractérisé en ce que** la profondeur des gorges (1b) et (1c) est de 1 à 10 fois supérieure à la profondeur des rainures (1d).

5. Organe de guidage selon la revendication 1, **caractérisé en ce que** la profondeur des gorges (1b) et (1c) est, au plus, égale à sensiblement le tiers de l'épaisseur du corps (1) ; la larguer desdites gorges étant comprise entre 0,5 et 5mm.

6. Organe de guidage selon la revendication 1, **caractérisé en ce que** la profondeur des rainures (1d) est comprise entre 0,1 et 0,6 mm environ.

7. Organe de guidage selon la revendication 1, **caractérisé en ce que** les rainures (1d) délimitent une zone représentant de 30 à 70 % de la zone de frottement.

8. Organe de guidage selon la revendication 1, **caractérisé en ce que** les gorges (1b) et (1c) sont positionnées entre 1 et 6 mm de chacune des extrémités de l'alésage (1a).

9. Organe de guidage selon l'une quelconque des revendications 1 à 8 **caractérisé en ce que** les gorges sont réparties sur la totalité de la longueur du corps avec un espace (e) sur lequel sont réparties sur la totalité de la longueur du corps avec un espace (e) selon lequel :

$$P \leq e \leq 6p$$

Formule dans laquelle :

p = pas entre les rainures ;
e = espacement entre les gorges.

**10.** Organe de guidage selon l'une quelconque des revendications 1 à 8 **caractérisé en ce que** le nombre de gorges (1b), (1c), (1e) est réparti sur la totalité de la longueur du corps et correspond à la formule :

$$\frac{0{,}1\,L}{l} \leq n \leq \frac{0{,}25\,L}{l}$$

formule dans laquelle :

n = nombre de gorges ;
L = longueur du corps ;
l= largeur des gorges.

**Claims**

1. **Greased** guide member **operating in semi-fluid lubrication** in the form of a body (1) having a bore (1a) for the mounting with friction and articulation and/or sliding capability of an element (2),
**characterised in that** the body (1) is made from a material with high wear and/or seizing and corrosion resistance, each of the ends of the bore (1a) has at least one groove (1b and 1c) capable of preventing **the grease** from leaving the friction zone, said bore (1a) having, at least between said grooves (1b and 1c), oriented slots (1d) emerging in at least one of the grooves and capable of acting as a **grease** supply.

2. Guide member as claimed in claim 1, **characterised in that** the bore in the body (1) has grooves (1e) distributed over its entire length to supply all the slots with **grease**.

3. Guide member as claimed in claim 1, **characterised in that** the slots (1d) are oriented so as to form a grid system.

4. Guide member as claimed in claim 1, **characterised in that** the grooves (1b and 1c) are between 1 and 10 times deeper than the slots (1d).

5. Guide member as claimed in claim 1, **characterised in that** the depth of the grooves (1b and 1c) is, at most, equal to approximately a third of the thickness of the body (1); the width of said grooves being between 0.5 and 5 mm.

6. Guide member as claimed in claim 1, **characterised in that** the depth of the slots (1d) is approximately between 0.1 and 0.6 mm.

7. Guide member as claimed in claim 1, **characterised in that** the slots (1d) define a zone covering between 30 and 70% of the friction zone.

8. Guide member as claimed in claim 1, **characterised in that** the grooves (1b and 1c) are positioned between 1 and 6 mm from each of the ends of the bore (1a).

9. Guide member as claimed in any one of claims 1 to 8, **characterised in that** the grooves are distributed over the entire length of the body with a space (e) according to which:

$$p \leq e \leq 6p$$

a formula wherein:

p = pitch between the slots;
e = spacing between the grooves.

10. Guide member as claimed in any one of claims 1 to 8, **characterised in that** the number of grooves (1b), (1c), (1e) is distributed over the entire length of the body and corresponds to the formula:

$$\frac{0.1\ L}{l} \le n \le \frac{0.25\ L}{l}$$

a formula wherein:

n = number of grooves;
L = length of the body;
1= width of the grooves.

**Patentansprüche**

1. Gefettetes Führungsorgan **im Schmierbetrieb** in Form eines Körpers (1) mit einer Bohrung (1a) für die Montage mit Reibung und Gelenkfähigkeit und/oder Gleitfähigkeit eines Elements (2),
**dadurch gekennzeichnet, dass** der Körper (1) aus einem Material gefertigt ist, das eine hohe Festigkeit gegen Verschleiß und/oder Festfressen und Korrosion aufweist, wobei jedes Ende der Bohrung (1a) mindestens eine Nut (1b und 1c) aufweist, die geeignet ist, das Heraustreten des **Fetts** aus der Reibungszone zu vermeiden, wobei die besagte Bohrung (1a) zumindest zwischen den besagten Nuten (1b und 1c) Richtungsrillen (1d) aufweist, die in mindestens eine der Nuten münden und geeignet sind, als **Fettreserve** zu dienen.

2. Führungsorgan nach Anspruch 1, **dadurch gekennzeichnet, dass** die Bohrung des Körpers (1) Nuten (1e) aufweist, die auf ihrer gesamten Länge verteilt sind, um sämtliche Rillen mit **Fett** zu versorgen.

3. Führungsorgan nach Anspruch 1, **dadurch gekennzeichnet, dass** die Rillen (1d) so ausgerichtet sind, dass sie ein Netzmuster bilden.

4. Führungsorgan nach Anspruch 1, **dadurch gekennzeichnet, dass** die Nuten (1b und 1c) 1 - 10mal tiefer sind als die Rillen (1d).

5. Führungsorgan nach Anspruch 1, **dadurch gekennzeichnet, dass** die Nuten (1b und 1c) höchstens so tief sind wie ziemlich genau ein Drittel der Materialdicke des Körpers (1), wobei die besagten Nuten zwischen 0,5 und 5mm breit sind.

6. Führungsorgan nach Anspruch 1, **dadurch gekennzeichnet, dass** die Tiefe der Rillen (1d) ca. 0,1 - 0,6 mm beträgt.

7. Führungsorgan nach Anspruch 1, **dadurch gekennzeichnet, dass** die Rillen (1d) eine Zone begrenzen, die 30 - 70% der Reibungszone ausmacht.

8. Führungsorgan nach Anspruch 1, **dadurch gekennzeichnet, dass** die Nuten (1b und 1c) 1 - 6 mm vom jeweiligen Ende der Bohrung (1a) positioniert sind.

9. Führungsorgan nach einem der Ansprüche 1-8, **dadurch gekennzeichnet, dass** die Nuten auf der gesamten Länge des Körpers verteilt sind, mit einem Raum (e), wonach:

$$p \le e \le 6p$$

in der Formel bedeuten:

p = Abstand zwischen den Rillen;
e = Zwischenraum zwischen den Nuten.

10. Führungsorgan nach einem der Ansprüche 1 - 8, **dadurch gekennzeichnet, dass** die Anzahl der Nuten (1b), (1c), (1e) auf der gesamten Länge des Körpers verteilt ist und der nachstehenden Formel entspricht:

$$\frac{0,1\,L}{l} \leq n \leq \frac{0,25\,L}{l}$$

in der Formel bedeuten:

n = Anzahl der Nuten;
L = Länge des Körpers;
1= Breite der Nuten.

## Fig. 1

## Fig. 2

**Fig. 3**

**Fig. 4**

**Fig. 5**

**Fig. 6**

**Fig. 7**

**Fig. 8**

**Fig. 9**

**Fig. 10**

**EP 1 851 453 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4678348 A
- US 4576488 A
- FR 2523010
- FR 2693520